# EUROPEAN PATENT SPECIFICATION

(11) **EP 1 657 316 B1**
(45) Date of publication and mention of the grant of the patent: **23.09.2009**
(21) Application number: 04819434.4
(22) Date of filing: 26.11.2004
(51) Int. Cl.: C22C 1/05, B22F 3/24

(54) **METHOD FOR PRODUCING REINFORCED PLATINUM MATERIAL**
VERFAHREN ZUR HERSTELLUNG VON VERSTÄRKTEM PLATINMATERIAL
PROCEDE PERMETTANT DE PRODUIRE UN MATERIAU EN PLATINE RENFORCE

(30) Priority: 28.11.2003 JP 2003400540
(43) Date of publication of application: 17.05.2006
(73) Proprietor: TANAKA KIKINZOKU KOGYO KABUSHIKI KAISHA, Chuo-ku, Tokyo 103-8206 (JP)
(72) Inventor: YAMASAKI, Haruki, Isehara-shi, Kanagawa 259-1146 (JP)
(74) Representative: Klunker . Schmitt-Nilson . Hirsch
(86) International application number: PCT/JP2004/017567
(87) International publication number: WO 2005/052200

(56) References cited:
- WO-A1-02/083961
- JP-A- 8 134 511
- US-A- 3 709 667
- US-A1- 2003 124 015

## Description

### TECHNICAL FIELD

The present invention relates to a method for producing a strengthened platinum material, and especially to a technology of producing a strengthened platinum material with the use of a platinum alloy powder obtained through melt-spray.

### BACKGROUND ART

Regarding a strengthened platinum material acting as a structural material used in handling a glass material or ceramic material, such as an optical glass and an optical fiber, in a molten state, various producing methods have been conventionally proposed. The strengthened platinum material is required to have such properties as a high creep strength and no occurrence of blisters.

As producing methods of a strengthened platinum material having high temperature strength properties, for example to improve a high creep strength at 1400°C, a method is known in which the metal oxide such as zirconium oxide is finely and uniformly dispersed in a platinum base metal of the strengthened platinum material. In this respect, various producing methods have been proposed to provide a strengthened platinum material having such metal oxide dispersed in the platinum base metal.

As an example of the producing methods, the present inventor has proposed a producing method of a strengthened platinum material with the use of melt-sprayed platinum alloy powder. The producing method can produce a strengthened platinum material having excellent high-temperature creep strength, in which: a heat treatment if conducted at a temperature of 1400°C or higher will not cause any blisters on a surface of the material; and metal oxide such as zirconium oxide has been finely dispersed. (See Patent Document 1).
Patent Document 1: International Publication No. 02/083961 corresponding to US 2033/0124015 A1

The producing method proposed by the present inventor comprises the steps of: oxidizing a platinum alloy powder obtained by melt-spray, wet-milling the platinum alloy powder with the use of an organic solvent; sintering, and forging the wet-milled platinum alloy powder, wherein the wet-milled platinum alloy fine powder is charged into a heat-resistant container and heated to 1,200 to 1,400°C in a vacuum atmosphere to be subjected to degassing.

According to the present invention, in order to conduct degassing, an organic solvent and other adsorbed gases adsorbed to the platinum alloy fine powder at the wet-milling are almost completely desorbed from the fine powder surface, thereby eliminating the occurrence of blisters produced on the surface of the material at high-temperature heat treatment. In addition, even subjected to such a high temperature degassing, the strengthened platinum material produced through subsequent sintering and forging treatments maintains a state in which metal oxide particles such as zirconium oxide are finely dispersed, and has excellent high-temperature creep properties.

However, it was found that the producing method, which the present inventors proposed has some matters to be improved as described hereinafter. Explanation is being made in the order of manufacturing steps. A first matter lies in an oxidation treatment, which is carried out on a melt-sprayed platinum alloy powder at 1200°C or higher and for 24 hours in an air atmosphere. This oxidation treatment advances sintering of the powder in a tray, forming an aggregated sintered body. For wet-milling treatment conducted in a next step, the sintered body needs to be powdered again. Specifically, a sintered body made aggregated through an oxidation treatment is pulverized, and then powdered again with the use of a mortar. Further in order to make the re-pulverized particles uniform, sieves having a predetermined mesh size had been conventionally used for screening. Thus, the present inventors' proposed manufacturing method, which involves the above-described oxidation treatment caused prolonged manufacturing time associated with increased steps and loss of platinum bare metal associated with adhesion of platinum to an alumina tray, thereby suffering from a defect that manufacturing yield cannot be improved.

In the conventional manufacturing methods, a wet-milled platinum alloy powder is put into a carbon-made heat-resistant container and degassed at 1300°C in a vacuum atmosphere. Since the platinum bare metal is adhered to the heat-resistant container during the degassing, troublesome maintenances including shaving off the adhered matters with the use of a knife or spatular material are required.

Further in forging, an agglomeration of platinum alloy powder, namely an ingot tends to crumble very easily. Since a sintered ingot has a denseness of as low as 35%, heat tends to be easily let out, thereby surface temperature will soon drop at an initial stage of forging. Consequently, immediately after forging of a short period of time, the ingot needs to be injected into an electric furnace for raising the temperature of the ingot. Thus, forging and heating will be carried out over and over again. Additionally, a bond strength of platinum particles immediately after sintering is so weak that an ingot crumble very easily. Therefore, there are restrictions on forging conditions that the ingot should be hit quickly and extremely weakly at an initial stage of forging so that crumbling of an ingot could be kept as little as possible. Even if forging can be carried out under ideal conditions, some platinum tends to crumble from porous portions of a surface of an ingot. Thus, it has been an inherent problem that costly platinum base metal will get scattered and lost, thereby production yield cannot be improved.

Plate materials of platinum alloy obtained through rolling after forging tend to cause, during welding, voids and splashes (phenomenon in which fine molten metals splash and spatter during welding of a strengthened platinum material). According to the production method, which the present inventor has proposed provides a denseness of an ingot of the order of 35% after forging carried out in an argon atmosphere at 1600°C. In other words, air accounts for 65% of the entire ingot to be forged, and when the ingot is forged in the atmosphere with the use of an air hammer, enormous proportion of the air is discharged outside the ingot. However, only a small proportion of air and gaseous component remaining in the ingot are trapped among sintered platinum grains, which will lead to voids and splashes during welding.

Oxide-dispersion-strengthened platinum materials are known to have an extremely deteriorated strength of weld thereof compared with that of a base material. In this regard, some measures including reinforcement by means of forge welding and diffusion bonding have been taken to insure a weld strength, however in most of joining for producing equipment provided with for example a glass melting tank, welding is adopted. Consequently, strengthened platinum materials, which often cause voids and splashes, will cause deteriorated weld strength and are likely to cause damages such as breakage of a glass melting tank.

### DISCLOSURE OF THE INVENTION

The present invention was made against a background of the above situation, and it is an object to improve the present-inventor's proposed method of producing a strengthened platinum material with the use of a platinum alloy powder obtained through melt-spray, and provide a method of producing a strengthened platinum material which requires more simplified operation, does not cause various problems arising from forging, namely voids and splashes during welding, and ensures weld strength.

In order to solve the above problems, the inventor made a study on his conventionally proposed method of producing a strengthened platinum material (See Patent Document 1). In the producing method according to Patent Document 1, about 10g of strengthened platinum material sample was collected for analysis, and an oxygen analysis was conducted to examine an oxidation ratio of zirconium, namely how much the injected zirconium had been oxidized, it was 50% with respect to the melt-sprayed platinum alloy powder sample, 60% with respect to the platinum alloy powder sample subjected to a subsequent oxidation treatment process with the powder sample contained in a heat resistant container, and 60% with respect to the platinum alloy powder sample subjected to degassing conducted at 1300°C subsequent to milling with the use of an attritor, thus showing an essentially constant oxidation ratio. After sintering conducted at 1600°C, zirconium oxide was almost decomposed to provide 5% of oxidation ratio, and after forging conducted in an air atmosphere at 1250°C, zirconium oxide provided 98% of oxidation ratio. As a result of consideration by comparing the oxidation ratio of zirconium and denseness (35%) of a not-yet-forged ingot, the inventor held that an ingot having lower denseness would allow air to penetrate well into the center of the ingot, thereby oxidizing most zirconium. Furthermore, as a result of having reviewed the size of dispersed particles, the present inventor found oxidation treatment conducted in an atmosphere at 1300°C for about an hour most optimal. Based on such knowledge, the present inventor led to come up with the present invention.

The present invention is directed to a method as claimed in claim 1. Specific embodiments are claimed in the dependent claims. The present invention defines a method for producing a strengthened platinum material, comprising the steps of: adding an organic solvent and wet-milling a platinum alloy powder obtained by melt-spray; degassing the milled platinum alloy powder by heating; sintering; and forging, wherein the method further comprising subjecting a sintered body formed by the sintering to oxidation treatment; and subjecting the sintered body to compression molding.

Since an oxidation treatment of a sintered body having low denseness in the method for producing a strengthened platinum material according to the present invention enables oxidation of zirconium to advance through to the center of the sintered body, and by subjecting the oxidation-treated sintered body to compression molding, the sintered body having low denseness is formed a compact having a predetermined shape to allow the subsequent forging to be readily and promptly conducted. That is to say, by subjecting a sintered body having an essentially empty state (i.e. very porous state) of denseness as low as 35%, the sintered body is allowed to be oxidized progressively to the center thereof in a short period of time, and subsequent compression molding can prevent heat from being let out from a sintered body during forging and the sintered body from crumbling, thereby preventing costly platinum base metal from getting scattered and lost, and improving production yield. Consequently, minor adjustment of striking power at an initial stage of forging can be eliminated, and reduction in forging time can be conspired, which is an epoch-making effect.

It is preferable if the sintering in the method for producing a strengthened platinum material according to the present invention is carried out so that a denseness of a sintered body falls within a range of 25% to 50%. The reason is that if the denseness is lower than 25%, the sintered body will easily crumble in transfer, which makes handling difficult, and if the denseness exceeds 50%, the sintered body will not be oxidized fully to a core thereof.

It is further essential that the temperature of an oxidation treatment in the method for producing a strengthened platinum material according to the present invention is carried out at 1000°C-1400°C. The reason is that if the temperature is lower than 1000°C, oxidation treatment of zirconium will not be advanced sufficiently, so that time period of oxidation treatment must be prolonged. If the temperature exceeds 1400°C, zirconium oxide will get agglomerated and easily coarsen, thereby failing to provide a strengthened platinum material having high creep strength.

It is preferable if the compression molding according to the present invention is carried out with hot pressing (hot press molding). The hot pressing enables compression molding from top and bottom under vacuum reduced pressure, so that degassing treatment can be conducted simultaneously with pressing treatment, thereby providing a high-density compact. It is essential that temperature of the hot pressing ranges from 20°C to 1200°C. If the temperature of the hot pressing exceeds 1200°C, hot pressing carried out in a vacuum atmosphere easily causes reductive reaction, thereby reducing an oxide-dispersion component (for example, zirconium oxide) contained in a platinum alloy, and decomposed oxygen will become gasified to generate bubbles, which contributes to blisters of materials and voids during welding. This phenomenon tends to be especially remarkable when a later-described carbon sheet is used. In contrast, the reason why the temperature of hot pressing is extended to 20°C as the lower limit, so-called room temperature is that the present inventor's research revealed hot pressing carried out at room temperature in a vacuum atmosphere will hardly cause a phenomenon of trapping of air, can make a sintered body of low-denseness a compact of high-denseness, thereby subsequent forging will be readily and promptly carried out.

Further, it is essential that hot pressing pressure ranges 14MPa to 40MPa. A pressure lower than 14MPa will not increase the denseness of compact so much, which easily crumble and diffuse heat during forge treatment, and traps air during forge processing, thereby likely to cause blisters and voids during welding a formed plate material. In contrast, a pressure exceeding 40MPa may destroy both a carbon molding for use in hot press and a punch bar, when the strengths of the molding and bar are taken into consideration.

With respect to the heat resistant container used in a degassing treatment in the present invention, it is preferable to provide the container with a carbon sheet onto which wet-milled platinum alloy fine powder is injected, and with respect to the hot press molding used in hot pressing, it is desirable to provide the molding with a carbon sheet and to arrange a sintered body on the press molding. Thus, a carbon sheet can effectively prevent a platinum base metal from adhering to a heat resistant container and a hot press molding, so that maintenance operations of a heat resistant container and a hot press molding can be eliminated. It is preferable if the thickness of the carbon sheet ranges from 0.03 to 0.5mm. If the thickness is smaller than 0.03mm, such a sheet will be no elastic, be deteriorated in shape-keeping capability, and be easily broken, thereby is impractical. In contrast, if the thickness exceeds 0.5mm, such a sheet will be poor in flexibility, easily crack up, thereby is impractical. In the present invention, it is possible to use a heat resistant container per se or a press molding per se formed with carbon and to adopt a process in which no carbon sheet is used, however taking production costs and strength thereof into consideration, it is deemed more practical to use a carbon sheet.

When a carbon sheet is used in degassing, it will give rise to a phenomenon that a carbon sheet is firmly fixed to an aggregation of platinum alloy fine powder. Similarly, when a carbon sheet is used in hot pressing, it will give rise to a phenomenon that a carbon sheet is firmly fixed to a surface of a formed body to be obtained. However, when a carbon sheet has been firmly fixed, it is possible to remove the carbon sheet by subjecting it to a high-temperature heat treatment for oxidative combustion in an air atmosphere.

The present invention as described above is suitable for producing a strengthened platinum material with, as a platinum alloy, Pt(platinum)-Zr(zirconium) alloy, Pt(platinum)-Rh(rhodium)-Zr(zirconium) alloy, or Pt(platinum)-Au(gold)-Zr(zirconium) alloy. Zr in the platinum alloy will become a metal oxide capable of improving high-temperature creep properties, and be dispersed in the strengthened platinum material. It is preferable if the Pt-Zr alloy is composed of 0.05-0.4wt% of Zr, and the balance being Pt, and it is desirable if the Pt-Rh-Zr alloy is composed of 0.05-0.4wt% of Zr, 5-20wt% of Rh, and the balance being Pt, and it is also desirable if the Pt-Au-Zr alloy is composed of 0.05-0.4wt% of Zr, 5-20wt% of Au, and the balance being Pt. The reason why the above compositions are preferable or desirable is that they are able to provide a strengthened platinum material having excellent high-temperature creep properties.

In the above described method for producing a strengthened platinum material according to the present invention, processing conditions of each wet-milling, sintering and forging are preferable if they meet the following details. In wet-milling, it is preferable to use either heptane or alcohol as an organic solvent because heptane or alcohol will enhance an effect of process melt-sprayed platinum alloy particles minutely and be easily separated from a surface of wet-milled fine powder. It is also desirable to dry the platinum alloy fine powder after the wet-milling process in order to remove an organic solvent, which adhered to powder during wet-milling. It is preferable if the sintering is carried out at the temperature of 1400°C-1700°C. The reason is that If the temperature is lower than 1400°C, sintering of platinum alloy fine powder will not advance sufficiently, thereby is likely to deteriorate material strength, and if it exceeds 1700°C, platinum particle in a strengthened platinum material and metal oxide will become coarsened, thereby will not be able to realize intended material strength. It is desirable that this sintering is carried out in an inert gas atmosphere such as for example argon gas. Further, it is desirable that the forging is carried out in an air atmosphere at a treatment temperature of 1100°C-1400°C. The reason is that if the temperature is lower than 1100°C, cracks are likely to occur, and if it exceeds 1400°C, zirconium oxide is likely to get coarsening.

As described above, according to the present invention, it is possible to produce a strengthened platinum material with the use of melt-sprayed platinum alloy powder and through a simpler working process, which will not cause problems due to a forging treatment, such as voids and splash during a welding process, ensures strength of weld and is excellent in high temperature creep property.

### BRIEF DESCRIPTION OF THE DRAWINGS

Fig. 1 is an X-ray observation photograph of weld where a strengthened platinum material according to Example has been used;
Fig. 2 is an X-ray observation photograph of weld where a strengthened platinum material according to Comparative Example has been used;
Fig. 3 is an observation photograph of a cross-sectional structure of the strengthened platinum material according to Example; and
Fig. 4 is an observation photograph of a cross-sectional structure of a strengthened platinum material, which has been oxidation-treated after hot pressed.

### BEST MODE FOR CARRYING OUT THE INVENTION

A preferred example of the present invention will now be described with reference to Example and Comparative Example.

### EXAMPLE:

A Pt (platinum)-Zr (zirconium) alloy ingot of 28 kg containing 0.3wt% of zirconium was first prepared through vacuum melt casting. The platinum alloy ingot was subjected to groove rolling and die wire drawing to form a wire having a wire diameter of 1.6 mm. The wire rod was then melted with arc discharge by use of an electric arc spray gun, and the molten Pt-Zr alloy was sprayed by means of compressed air toward a distilled water surface, which is 1 m apart from a muzzle of the electric arc spray gun to prepare 24 kg of a spherical powder having a particle diameter of 10 to 200 µm.

In Example, spherical powder of 12kg, which is half of 24kg, was divided equally among three without being subjected to oxidation treatment, and each divided powder was subjected to wet-milling and drying. The wet-milling was carried out through injecting spherical powder of 4kg and zirconia ball of 7kg having a diameter of 5mm into an attritor, which is a wet-milling machine. An attritor pot is a zirconia container of which lid and a milling blade provided in the container are made from SUS 304. The container is further provided with a pressure-reducing mechanism and a valve for charging an organic solvent.

After the spherical powder and zirconia ball were injected into the attritor pot, the pot was decompressed to 0.4 Pa by a pressure-reducing mechanism. Heptane of 30 cc was added from the valve for charging an organic solvent while argon gas was introduced into the pot, and the valve was closed when the pressure inside the pot finally reached 1.1 atm of argon pressure. The Attritor pot was attached to an upright drill press, and the milling blade was rotated at a rotational speed of 340 rpm to perform wet-milling for about 11 hours. The wet-milled fine powder of 12kg was poured into a lidless stainless steel pad container and dried for two hours at 120°C to remove heptane. Thus obtained fine powder was scale-like in various shapes having a thickness of about 0.3 to about 1 µm, each surface area being very large.

The wet-milled fine powder of 12kg was charged into a lidless carbon-made container (with an internal dimension: height 120mm × width 120mm × depth 120mm). Both on a bottom and wall of the carbon-made container, a carbon sheet (Product by Toyo Tanso Co., Ltd. PF-20 having a thickness of 0.2mm) was preliminarily laid out. The container was put in the vacuum sintering furnace, heated from room temperature to 1300°C at a rate of temperature increase of 5°C/min. in vacuum of 0.4Pa, degassed while being held at 1300°C for 3 hours, and then left for natural cooling.

After the degassing and cooling, it was found that the platinum alloy fine powder in the carbon-made container had been agglomerated in a shape identical to the internal shape of the container, and the carbon sheet had been firmly fixed to the agglomeration except on an upper surface of the agglomeration. Then, the agglomeration was injected into the electric furnace and subjected to high-temperature heat treatment in the atmosphere at 1200°C for 30 minutes. The high-temperature heat treatment was carried out to apply oxidative combustion and remove the carbon sheet firmly fixed on the surface.

The agglomeration of platinum alloy fine powder from which the carbon sheet had been removed was found to have formed so-called a sintered body shaped analogous to an inside of the carbon container, and the fine powder sintered body had a denseness of 30%. For determining the denseness, the mass of the sintered body and its dimension were measured, and the density of the sintered body was calculated from the mass and volume. The density of the sintered body is divided by the density of platinum (21.37 × 10³ kg/m³) and the result is shown as a percentage to obtain the denseness.

The degassed fine powder sintered body was, as it was, put into a vacuum argon sintering furnace, heated from room temperature to 1300°C at a rate of temperature increase of 5°C/min in an argon atmosphere of 0.4 Pa, further heated from 1300°C to 1600°C at a rate of temperature increase of 10°C/min, and sintered for three hours while maintaining a temperature of 1600°C. The size of the sintered body after sintering was of length 118mm × width 118mm × height 115mm, and the denseness thereof was 35%. Then, the sintered body was injected into an air furnace of 1300°C, maintained for an hour at 1300°C, subjected to oxidation treatment, and then left to stand at room temperature in atmosphere for air cool.

Subsequently, the sintered body, which had been sintered was subjected to hot press for compression molding. The hot press is a resistance-heating type vacuum hot press, which is made of carbon material (ISO-63) and has a carbon molding for use in a hot press consisting of a die bearer having an internal dimension of height 120mm × width 120mm × depth 200mm, and a punch bar having an internal dimension of length 120mm × width 120mm × height 160mm. Between the carbon molding for use in a hot press and the sintered body, a carbon sheet (Product by Toyo Tanso Co., Ltd. PF-20) was preliminarily inserted. The sintered body was heated from room temperature to 1000°C at a rate of temperature increase of 5°C/min in vacuum of 0.8Pa, and maintained at 1000°C for an hour. During the retainment at 1000°C for an hour, the press strength was increased from normal pressures at a rate of pressure increase to 20ton after 5 minutes just after the temperature reached 1000°C. After maintained for 30 minutes, the pressure was reduced to normal pressures (6ton) at a rate of pressure decrease of 4ton/min. After natural cooling, a compact, which had been compression-molded with the use of a hot press was taken out.

Since the taken out compact had on the surface thereof a carbon sheet in a fixed manner, the compact was injected into an electric furnace, subjected to a high-temperature heat treatment at 1200°C in an atmosphere for 30 minutes to apply oxidative combustion to and remove the carbon sheet. The denseness of the compact from which the carbon sheet had been removed was 78%.

Thus obtained compact was subjected to high-temperature forging at 1300°C. The forged ingot has denseness of 100%. In forging, the sintered body suffered no crumbling or no base metal loss, and it took an hour and 40 minutes from initiation of forging to completion of heat treatment after forging. Then, the forged ingot was subjected to annealing in atmosphere at 1300°C for 30 minutes. Subsequently, the ingot was cold-rolled to produce a strengthened platinum material having a thickness of 1 mm.

### COMPARATIV E EXAMPLE:

This Comparative Example is based on the present inventor's conventionally proposed strengthened platinum material. In this Comparative Example, the remaining 12kg of spherical powder obtained by way of melt-spray described in the above Example was employed. The spherical powder of 12kg was first divided into two equal parts, injected into an open-top alumina tray, and then subjected to an oxidation treatment in atmosphere at 1250°C for 24 hours.

Subsequently, the oxidation-treated spherical powder of 12kg was subjected to wet-milling and drying, both of which have been described in the above Example. Since the conditions, methods, and the like of the wet-milling and drying are the same as those in the above Example, further explanation is omitted.

Thus obtained fine powder of 12kg was charged into a lidless carbon-made container (with an internal dimension: height 120mm × width 120mm × depth 120mm) in a manner as done in Example. Then, the container was put in the vacuum sintering furnace, heated from room temperature to 1300°C at a rate of temperature increase of 5°C/min. in vacuum of 0.4Pa, degassed while being held at 1300°C for 3 hours, and then left for natural cooling. When the platinum alloy fine powder was taken out from the carbon container after the degassing and cooling, the fine powder was found to have formed a sintered body having an inner shape of the carbon container, and the fine powder sintered body had a denseness of 30%.

The degassed fine powder sintered body was, as it was, put into a vacuum argon sintering furnace, heated from room temperature to 1300°C at a rate of temperature increase of 5°C/min in an argon atmosphere of 0.4 Pa, further heated from 1300°C to 1600°C at a rate of temperature increase of 10°C/min, and sintered for three hours while maintaining a temperature of 1600°C. The size of the sintered body after sintering was of length 118mm × width 118mm × height 115mm, and the denseness thereof was 35%.

The sintered body was subjected to high-temperature forging at 1300°C. In forging, the sintered body initially had low denseness, so that the surface of the sintered body could readily crumble like a molten rock. For this reason, the sintered body was hit carefully and slowly, however about 250g of base metal crumbled. The crumbled base metal was collected after forging, however it was confirmed 5g of base metal had been lost. Further, the process time required as long as five hours from initiation of forging to completion of annealing after forging. The forged ingot has denseness of 100%. Then, the forged ingot was subjected to annealing in atmosphere at 1300°C for 30 minutes. Subsequently, the ingot was cold-rolled to produce a strengthened platinum material having a thickness of 1 mm.

Next, description will be made on results of property evaluation made with the use of the strengthened platinum materials according to Example and Comparative Example obtained through the above described production method. Results of evaluation on high-temperature creep properties are described first. Creep test pieces (JIS13B tensile test piece) were taken from each strengthened platinum material according to Example and Comparative Example, and stress rupture (creep) tests were carried out under a constant load in atmosphere at a temperature of 1400°C. The results are shown in Table 1 (Example) and Table 2 (Comparative Example).

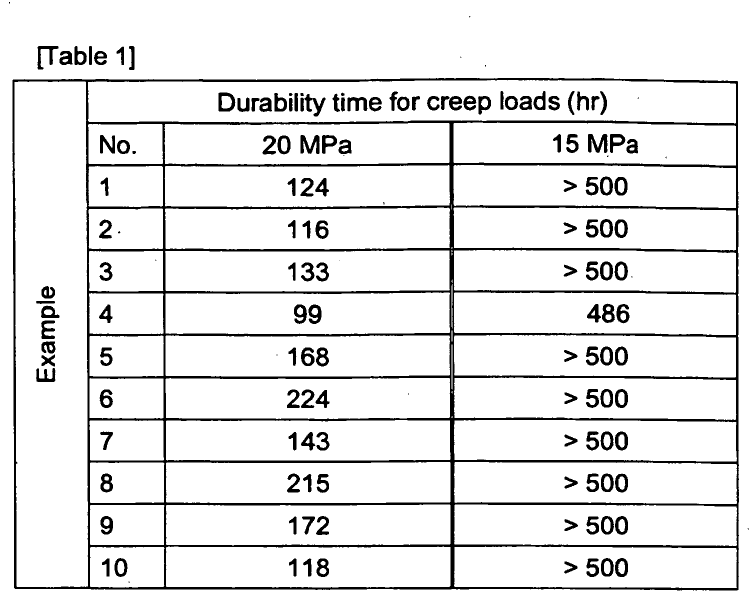

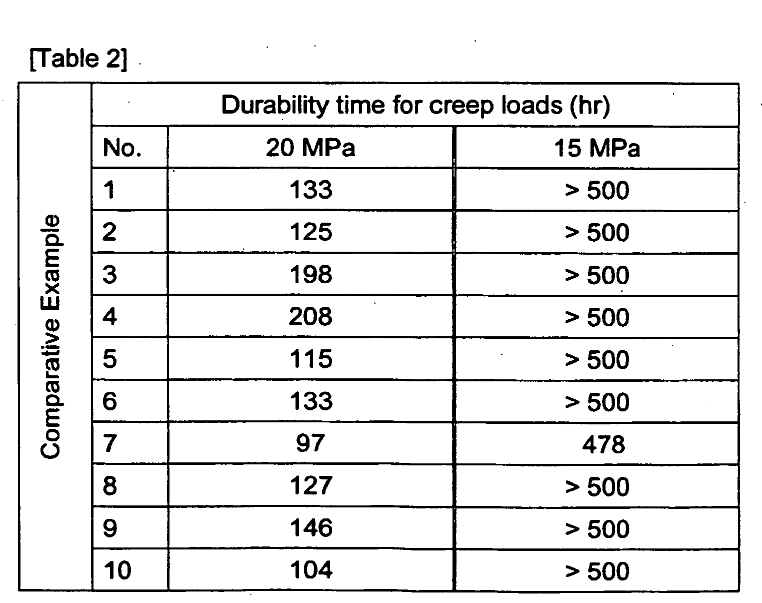

As Table 1 and Table 2 show, a load equivalent to 20MPa was applied in both Example and Comparative example, the materials had creep durability time of 100 hours or longer except for a sample. On the other hand, when a load equivalent to 15MPa was applied, the materials showed creep durability time of 500 hours or longer except for a sample, and it was found that both materials compared favorably with each other in high-temperature creep properties.

Next, search results of blister properties of the materials are described. Three pieces of plates each having a size of 100 mm long × 100 mm wide (1 mm thick) were cut from each of the strengthened platinum materials according to Example and Comparative Example, and after the plates were heated for 24 hours at three temperatures of 1200°C, 1400°C, and 1600°C in the atmosphere, the surface of each plates was visually observed. No occurrence of blisters was confirmed in terms of all the temperatures in Example or Comparative Example.

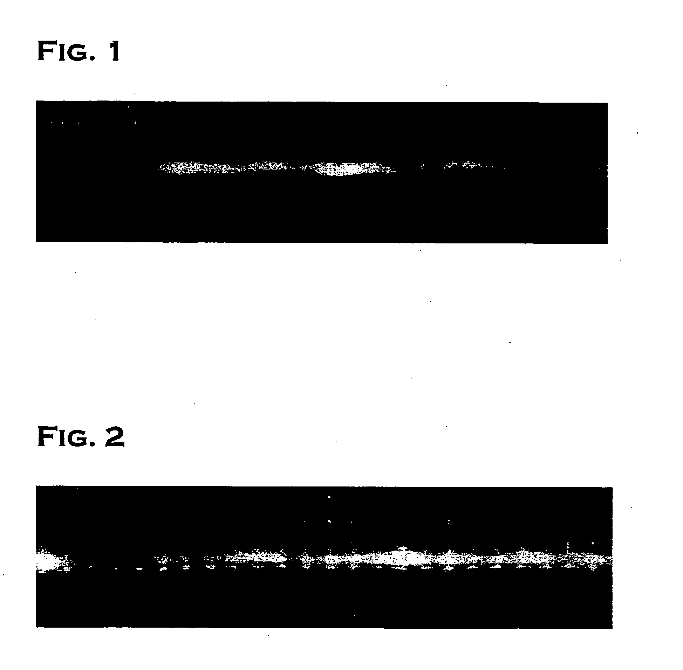

Subsequently, description will be made on property evaluation of weld. Two pieces of plates each having a size of 100 mm long × 100 mm wide (1 mm thick) were cut from each of the strengthened platinum materials according to Example and Comparative Example, and test pieces were prepared by cutting both the said two pieces at a center thereof. With the cut section of the test pieces confronted, the weld was welded with the use of a plasma welding machine. As a result, in welding the plates according to Comparative Example, imperceptible splashes smaller than a weld bead were observed during welding. In contrast, in welding according to Example, no splashes were observed during welding. Figs. 1 and 2 are respectively a negative photograph showing an X-ray observation of the welds of Example and Comparative Example. Whitish portion located at a center of the photographs of Figs. 1 and 2 is a weld bead, and the weld of Example in Fig. 1 did not show any voids. In contrast, in the weld bead of Comparative Example in Fig. 2, some voids or black patchy patterns were confirmed in the vicinity of an interface of the weld bead.

Next, thus welded plate materials were subjected to creep tests, and properties thereof were evaluated. In evaluating the creep properties, the employed were creep test pieces (JIS13B tensile test piece) taken from each welded plate material according to Example and Comparative Example with the welds of a plate materials positioned center of the creep test pieces. Then, stress rupture (creep) tests were carried out under a constant load in the atmosphere at a temperature of 1400°C. The results are shown in Table 3 (Example) and Table 4 (Comparative Example).

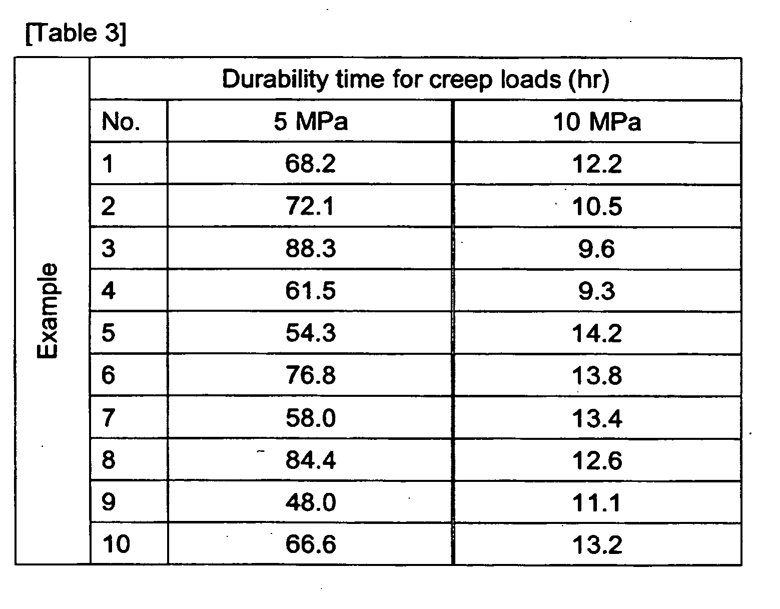

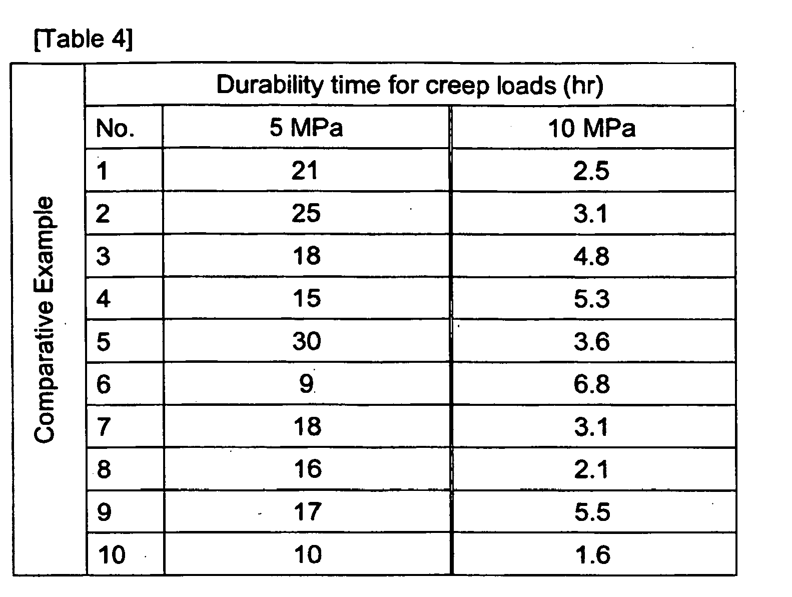

As Tables 3 and 4 show, creep rupture strength was of 50hours under 5MPa in example whereas the creep time in Comparative Example was significantly short. In light of the above, the strengthened platinum materials according to Example were found clearly excellent in properties in welding compared with those according to Comparative Example.

Next, description will be made on results of oxidation ratio of zirconium measured in each step in Example and Comparative Example. A small amount (5g-10g) of samples were collected from each process shown in Table 5, and oxidation ratio of each zirconium was measured.

**[Table 5]**

| Process | Example | Comparative Example |
|---|---|---|
| After melt-spray | 48 | 48 |
| After oxidation treatment at 1250°C × 24hrs | - | 60 |
| After subjected to an attritor | incapable measurement | incapable measurement |
| Immediately after sintering at 1600°C | 4 | 4 |
| After oxidation treatment at 1300°C × 1 hr | 100 | - |
| After 20ton-hot pressing at 1000°C | 99 | - |
| After subjected to high temperature forging at 1300°C | 98 | 98 |
| After rolling | 99 | 99 |

| | | |
|---|---|---|
| (Unit: %) | | |

As Table 5 shows, notwithstanding the oxidation treatment after melt-spraying in Comparative Example, final oxidation ratio of zirconium was confirmed to be the same between Example and Comparative Example.

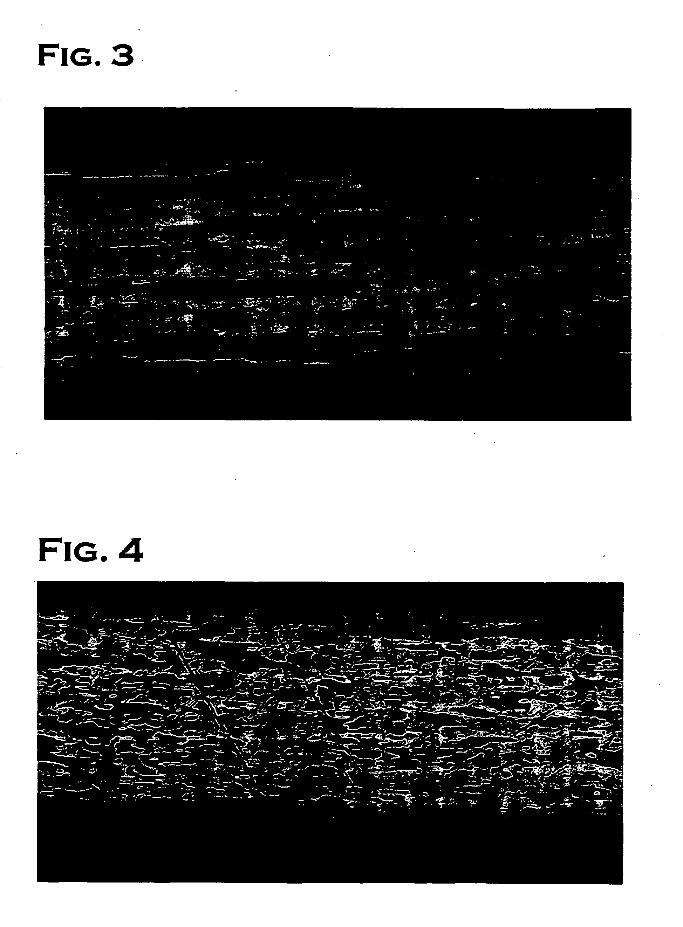

Lastly, description is made on structuration of the strengthened platinum materials according to Example. Fig. 3 is a photograph showing observation of a cross-section structure of the ingot high-temperature forged in the above-described Example. Fig. 4 shows observation of a cross-section structure of an ingot obtained through producing strengthened platinum materials, which were oxidation-treated after hot-pressed in the manufacturing procedure in the above-described Example (manufacturing conditions in each processing step are the same as the counterparts of Example).

As is clear from Fig. 4, the strengthened platinum materials obtained from a manufacture which was oxidation-treated after hot-pressed had a surface layer principally got oxydized (the oxidation ratio of the oxidation-treated zirconium was 25%), and a structure on the surface layer side was observed to have elongated crystal grains having a high aspect ratio. Also observed was that an inner side of the strengthened platinum materials presented a spherical crystal structure compared with the surface layer. Judging from the structural condition, it was not expected that a high creep strength was hoped for. In contrast, it was determined that, as Fig. 3 shows, the strengthened platinum materials obtained through the procedure according to Example have approximately the same structural condition both in the surface layer and in the inner side, thereby could realize high creep strength.

## Claims

1. A method for producing a strengthened platinum material, wherein the platinum material is any one of a Pt-Zr alloy, Pt-Rh-Zr alloy, or Pt-Au-Zr alloy, the method comprising the steps of
melt-spraying the platinum material to obtain a platinum alloy powder, adding an organic solvent to said powder and performing wet-milling, degassing the wet-milled powder,
sintering the powder to produce a sintered body,
subjecting the sintered body to an oxidation treatment at a temperature of 1000 to 1400 °C,
compression molding said sintered body at a temperature of 20 to 1200 °C and at a minimum pressure of 14 MPa, and
forging the compression moulded sintered body.

2. The method for producing a strengthened platinum material according to claim 1, wherein said sintering is carried out so that the sintered body should have denseness of 25%-50%.

3. The method for producing a strengthened platinum material according to claim 1 or 2, wherein said oxidation treatment is carried out at 1200-1400°C.

4. The method for producing a strengthened platinum material according to any of claims 1 to 3, wherein said compression molding is carried out through hot pressing.

5. The method for producing a strengthened platinum material according to claim 4, wherein hot pressing pressure is 14MPa-40MPa.

6. The method for producing a strengthened platinum material according to claim 4 or 5, wherein said hot pressing is carried out with a sintered body being arranged in a press die provided with a carbon sheet.

7. The method for producing a strengthened platinum material according to any of claims 1 to 6, wherein said degassing is carried out by injecting said wet-milled platinum alloy fine powder into a heat resistant container provided with a carbon sheet.

8. The method for producing a strengthened platinum material according to claim 6 or 7, wherein said carbon sheet is 0.03-0.5mm in thickness.

9. The method for producing a strengthened platinum material according to any of claims 6 to 8, wherein a carbon sheet firmly fixed to a sintered body due to hot pressing or a carbon sheet firmly fixed to an agglomeration of platinum alloy fine powder due to degassing is subjected to high-temperature heat treatment for oxidization combustion in an air atmosphere to get removed.

## Patentansprüche

1. Verfahren zur Herstellung eines gehärteten Platinmaterials, bei dem das Platinmaterial eine Pt-Zr-Legierung, eine Pt-Rh-Zr-Legierung oder eine Pt-Au-Zr-Legierung ist, wobei das Verfahren die Schritte aufweist des Schmelzspritzens des Platinmaterials, um ein Platinlegierungspulver zu erhalten,
Zugebens eines organischen Lösungsmittels zu dem Pulver und des Durchführens eines Nassvermahlens,
Entgasens des nassvermahlenen Pulvers,
Sinterns des Pulvers, um einen Sinterkörper herzustellen,
Unterziehens des Sinterkörpers einer Oxidationsbehandlung bei einer Temperatur von 1000 bis 1400°C,
Formpressens des Sinterkörpers bei einer Temperatur von 20 bis 1200°C und bei einem Minimaldruck von 14 MPa, und
Schmiedens des formgepressten Sinterkörpers.

2. Verfahren zur Herstellung eines gehärteten Platinmaterials nach Anspruch 1, bei dem das Sintern so ausgeführt wird, dass der Sinterkörper eine Dichte von 25% bis 50% haben sollte.

3. Verfahren zur Herstellung eines gehärteten Platinmaterials nach Anspruch 1 oder 2, bei dem die Oxidationsbehandlung bei 1200 bis 1400°C ausgeführt wird.

4. Verfahren zur Herstellung eines gehärteten Platinmaterials nach einem der Ansprüche 1 bis 3, bei dem das Formpressen durch Heißpressen ausgeführt wird.

5. Verfahren zur Herstellung eines gehärteten Platinmaterials nach Anspruch 4, bei dem der Heißpressdruck 14 MPa bis 40 MPa beträgt.

6. Verfahren zur Herstellung eines gehärteten Platinmaterials nach Anspruch 4 oder 5, bei dem das Heißpressen mit einem Sinterkörper, der in einer Pressform angeordnet ist, die mit einem Kohlenstoff-Flachmaterial ausgestattet ist, ausgeführt wird.

7. Verfahren zur Herstellung eines gehärteten Platinmaterials nach einem der Ansprüche 1 bis 6, bei dem das Entgasen ausgeführt wird durch Einspritzen des nassvermahlenen feinen Platinlegierungspulvers in einen hitzebeständigen Behälter, der mit einem Kohlenstoff-Flachmaterial ausgestattet ist.

8. Verfahren zur Herstellung eines gehärteten Platinmaterials nach Anspruch 6 oder 7, bei dem das Kohlenstoff-Flachmaterial eine Dicke von 0,03 bis 0,5 mm hat.

9. Verfahren zur Herstellung eines gehärteten Platinmaterials nach einem der Ansprüche 6 bis 8, bei dem ein Kohlenstoff-Flachmaterial, das aufgrund von Heißpressen fest an einem Sinterkörper angebracht ist, oder ein Kohlenstoff-Flachmaterial, das aufgrund von Entgasen fest an einem Klumpen von feinem Platinlegierungspulver angebracht ist, in einer Luftatmosphäre einer Hochtemperatur-Hitzebehandlung zur Oxidationsverbrennung unterzogen wird, um entfernt zu werden.

## Revendications

1. Procédé pour produire du platine renforcé, dans lequel le platine est l'un quelconque d'un alliage Pt-Zr, d'un alliage Pt-Rh-Zr ou d'un alliage Pt-Au-Zr, le procédé comprenant les étapes consistant à :
pulvériser à l'état fondu le platine pour obtenir une poudre d'alliage de platine,
ajouter un solvant organique à ladite poudre et effectuer un broyage humide,
dégazer la poudre obtenue par broyage humide,
fritter la poudre pour produire un corps fritté,
soumettre le corps fritté à un traitement d'oxydation à une température de 1000 à 1400 °C,
mouler en compression ledit corps fritté à une température de 20 à 1200 °C et à une pression minimum de 14 MPa, et
forger le corps fritté moulé en compression.

2. Procédé pour produire du platine renforcé selon la revendication 1, dans lequel ledit frittage est effectué de sorte que le corps fritté a une densité de 25 % à 50 %.

3. Procédé pour produire du platine renforcé selon la revendication 1 ou 2, dans lequel ledit traitement d'oxydation est effectué à 1200 à 1400 °C.

4. Procédé pour produire du platine renforcé selon l'une quelconque des revendications 1 à 3, dans lequel ledit moulage en compression est effectué par pressage à chaud.

5. Procédé pour produire du platine renforcé selon la revendication 4, dans lequel la pression de pressage à chaud est de 14 MPa à 40 MPa.

6. Procédé pour produire du platine renforcé selon la revendication 4 ou 5, dans lequel ledit pressage à chaud est effectué avec un corps fritté agencé dans une matrice de presse pourvue d'une feuille de carbone.

7. Procédé pour produire du platine renforcé selon l'une quelconque des revendications 1 à 6, dans lequel ledit dégazage est effectué en injectant ladite poudre fine d'alliage de platine obtenue par broyage humide dans un conteneur résistant à la chaleur pourvu d'une feuille de carbone.

8. Procédé pour produire du platine renforcé selon la revendication 6 ou 7, dans lequel ladite feuille de carbone a une épaisseur de 0,03 à 0,5 mm.

9. Procédé pour produire du platine renforcé selon l'une quelconque des revendications 6 à 8, dans lequel une feuille de carbone fixée fermement à un corps fritté du fait d'un pressage à chaud ou une feuille de carbone fixée fermement à un agglomérat de poudre fine d'alliage de platine du fait d'un dégazage est soumise à un traitement thermique à haute température pour une combustion d'oxydation dans une atmosphère d'air pour être retirée.
